# FASCICULE DE BREVET EUROPEEN

(11) **EP 3 611 822 B1**
(45) Date de publication et mention de la délivrance du brevet: **10.11.2021**
(21) Numéro de dépôt: 19201728.3
(22) Date de dépôt: 21.12.2017
(51) Int. Cl.: H02K 1/14, H02K 1/18, H02K 5/04, H02K 7/116, H02K 11/33, H02K 11/02, H02K 1/28, H02K 5/00, H02K 5/22, H02K 7/14, F16H 57/02

(54) **MOTOREDUCTEUR COMPACT**
KOMPAKTER GETRIEBEMOTOR
COMPACT GEAR MOTOR

(30) Priorité: 21.12.2016 FR 1662976
(43) Date de publication de la demande: 19.02.2020
(62) Demande divisionnaire de: 17828737.1
(73) Titulaire: MMT AG, 6300 Zug (CH)
(72) Inventeur: WATRIN, Mathieu, 2300 LA CHAUX-DE-FONDS (CH); MELLERE, Anthony, 90100 DELLE (FR)
(74) Mandataire: IP Trust

(56) Documents cités:
- EP-A1- 1 911 951
- EP-A1- 2 961 038
- EP-A2- 2 485 367
- WO-A1-02/29959
- WO-A1-2016/092035
- DE-A1- 10 115 151
- DE-A1-102015 210 648
- DE-U1-202016 000 143

## Description

### Domaine de l'invention

La présente invention concerne le domaine des actionneurs mécatroniques destinés notamment à la commande d'organes mécaniques d'un véhicule automobile, par exemple les grilles d'aération, les volets de climatisation ou plus généralement des obturateurs de vanne. Il s'agit d'organes nécessitant un couple relativement élevé, avec un déplacement de quelques dizaines de degrés et une précision de positionnement typique de moins de 5 degrés, ainsi qu'un encombrement minimal.

### Etat de la technique

On connaît dans l'état de la technique la demande de brevet DE102014107900 décrivant un actionneur avec un moteur électrique, en particulier un moteur à courant continu sans balais comportant un stator et un rotor pourvu d'un pignon d'entraînement qui transmet le mouvement à un train d'engrenages avec au moins une roue intermédiaire.

La demande de brevet allemand DE102011054955 décrit un autre exemple d'un tel actionneur de l'art antérieur.

Le document EP 2 485 367 A2 décrit aussi un exemple d'un actionneur mécatronique comprenant un stator présentant une forme d'étoile.

### Inconvénients de l'art antérieur

Les solutions de l'art antérieur ne sont pas optimisées en ce qui concerne l'encombrement. Le remplissage du volume intérieur du boîtier n'est pas maximisé, et il en résulte des dimensions et un encombrement excessifs.

Par ailleurs, la tenue aux vibrations et au choc n'est pas totalement satisfaisante pour des applications automobiles, et les vibrations peuvent provoquer la sortie inopinée du circuit imprimé de ses supports, ou le démontage accidentel de certains composants mécaniques ou électromagnétiques.

### Solution apportée par l'invention

Afin de remédier à ces inconvénients, l'invention concerne selon son acception la plus générale un actionneur mécatronique selon la revendication 1.

L'actionneur selon l'invention comporte selon un mode de mise en œuvre particulier un ressort métallique positionné en compression entre une zone non isolée de la culasse dudit stator et une piste conductrice de masse du circuit imprimé.

Avantageusement, ledit stator présente un perçage non isolé pour recevoir la partie inférieure dudit ressort, la surface périphérique dudit ressort venant en contact avec la surface intérieure non isolée dudit perçage lorsque le ressort est mis en compression par le circuit imprimé.

Selon une variante particulière, ledit boîtier est constitué par une coque et un couvercle de fermeture complémentaires, l'une des faces latérales de ladite coque présentant une protubérance intérieure percée par une cavité débouchant, positionné entre deux roues dentées, et une deuxième protubérance percée par une cavité de section non circulaire, ledit couvercle présentant deux plots complémentaires auxdites cavités, d'une longueur supérieure à d'autres plots de liaison, le couvercle présentant en outre des paliers de guidage de l'extrémité supérieure des axes mécaniques.

Avantageusement, ledit couvercle présente en outre au moins un plot formant une butée pour le circuit imprimé, ladite butée ne venant pas en contact avec le circuit imprimé lorsque ce dernier est en position nominale.

Selon un mode de réalisation particulier, ledit couvercle présente en outre au moins un plot formant une butée pour le stator, ladite butée ne venant pas en contact avec le stator lorsque ce dernier est en position nominale.

Selon un autre mode de réalisation particulier, le boîtier présente trois prolongements de fixation disposé au niveau de trois coins du boîtier, chacun desdits prolongements étant traversé par un perçage dont l'axe est parallèle aux axes mécaniques du moteur et des roues dentées, l'un desdits prolongement présentant une patte de positionnement dans un logement complémentaire, un autre desdits prolongements présentant une griffe de clipsage lors du pivotement du boîtier par rapport à ladite patte de positionnement.

### Description détaillée d'un exemple non limitatif de l'invention

La présente invention sera mieux comprise à la lecture de la description détaillée d'un exemple non limitatif de l'invention qui suit, se référant aux dessins annexés où :
- la figure 1 représente une vue en perspective de trois quart dessus d'un actionneur selon l'invention ;
- la figure 2 représente une vue selon un plan de coupe médian de l'actionneur selon l'invention, couvercle et circuit imprimé enlevés ;
- la figure 3 représente une vue selon un plan de coupe médian de l'actionneur selon l'invention, couvercle enlevé ;
- la figure 4 représente une vue en détail de la liaison électrique entre le stator et le circuit imprimé ;
- la figure 5 représente une vue de dessous du couvercle.

### Description détaillée d'un exemple d'actionneur

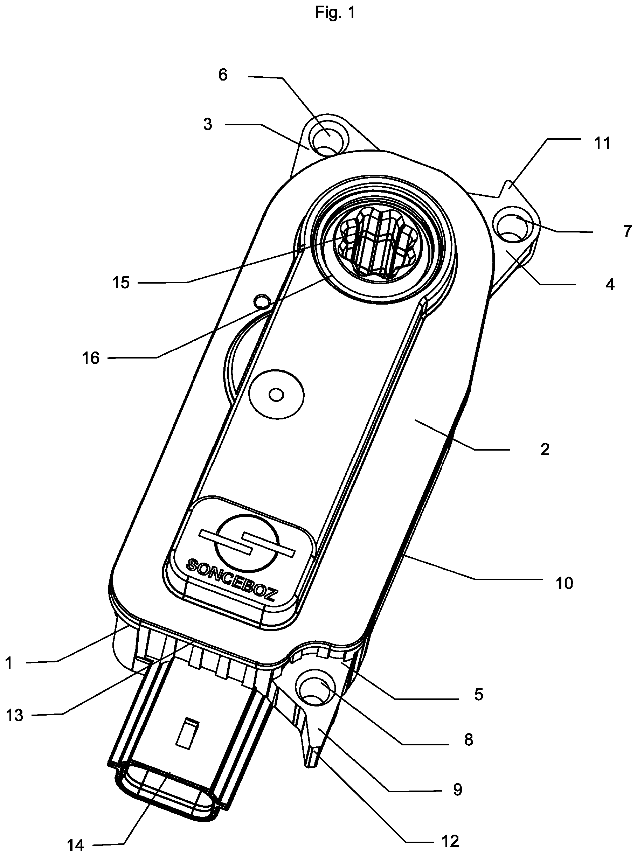

La figure 1 représente une vue extérieure d'un exemple d'actionneur, constitué par une coque (1) fermée par un couvercle (2).

La coque (1) présente trois prolongements (3, 4, 5) au niveau de trois de ses angles. Chacun des prolongements présente un perçage respectivement (6, 7, 8).

Les deux prolongements (4, 5) présentent une double fonction de fixation :
- soit par vissage ou rivet traversant les perçages (7, 8)
- soit par clipsage.

Pour permettre une fixation par clipsage, l'un des prolongements (5) présente une patte (9) qui peut venir se caler dans un logement prévu sur une structure d'accueil.

Le prolongement (4), prévu sur la même face latérale (10) que le prolongement (5) munie de la patte (9), présente un crochet (11) qui vient coopérer avec une partie complémentaire de la structure d'accueil. La mise en place se fait en positionnant l'actionneur en engageant la patte (9) dans la zone d'accueil, puis en le basculant par rapport à l'arête inférieure (12) de la patte, jusqu'à ce que le crochet (11) soit engagé dans la partie complémentaire de la structure d'accueil.

L'une des faces transversale (13) est prolongée par un manchon creux (14) pour l'introduction d'un connecteur mâle prévu sur un cordon de raccordement.

Le couvercle (2) présente une ouverture (15) à l'intérieure de laquelle est placé un palier (16) de guidage de la roue de sortie.

Optionnellement, le boîtier peut être également percé symétriquement pour permettre le passage d'un axe de transmission traversant ou le raccordement sur l'actionneur de deux axes de transmission.

La roue de sortie peut présenter des sections différentes, d'un côté et de l'autre, pour le raccordement d'axes de sections différentes.

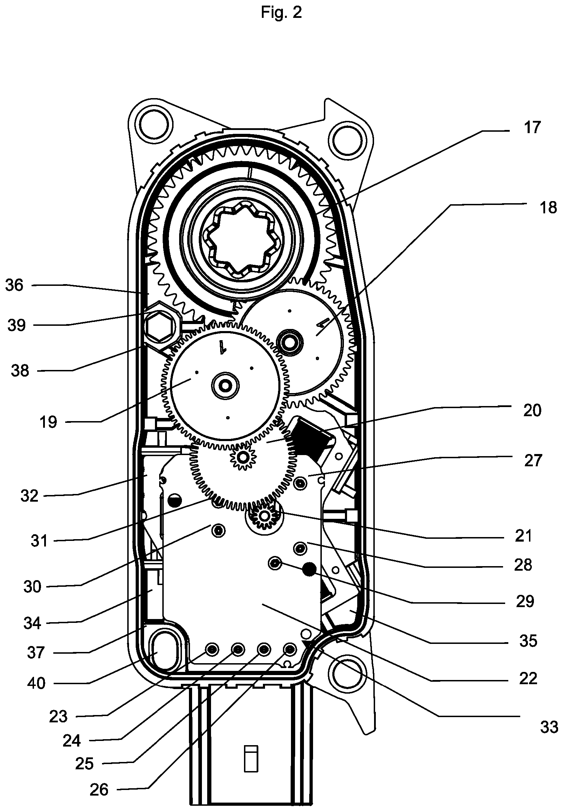

La figure 2 représente une vue de dessus de l'actionneur après retrait du couvercle (2).

La roue de sortie (17) est entraînée par un train d'engrenages formé d'une succession de roues dentées (17 à 21), montées sur des axes parallèles, perpendiculaires au plan de liaison entre le couvercle (2) et la coque (1).

Le rotor (71) du moteur électrique entraîne une roue (21) entraînant le train d'engrenages.

L'axe du rotor traverse un perçage d'un circuit imprimé (22).

Aucun composant électronique n'est monté sur la face supérieure du circuit imprimé (22) ce qui permet une réalisation par un procédé de soudure par vague en une seule passe machine simple.

Le circuit imprimé (22) présente une série de trous étamés (23 à 26) pour la liaison avec les broches du connecteur, s'étendant perpendiculairement au plan médian.

Il présente également des trous étamés (27 à 31) - un sixième trou étamé étant masqué sur la figure 2 par la roue dentée (20) - pour la connexion des plots d'alimentation des bobines électriques. Ces plots sont par exemple des plots à emmanchement (« press-fitt » en anglais) permettant de réaliser le raccordement électrique du circuit imprimé (22) sans soudure, par un simple chassage du circuit imprimé (22) sur les plots en érection selon une direction perpendiculaire à la surface du circuit imprimé (22).

La surface du circuit imprimé (22) ne recouvre pas la surface enveloppante du stator (32).

La projection du cercle circonscrit au stator (32) sur un plan transversal recouvre entièrement la surface projetée du circuit imprimé (22) sur ce même plan, à l'exception de la partie (33) du circuit imprimé (22) assurant la liaison avec le connecteur.

Par ailleurs, le circuit imprimé (22) ne vient pas en contact avec les bords de la coque (1), mais préserve de part et d'autre un espace (34, 35) d'une largeur supérieure à 10% de la largeur intérieure de la coque (1).

La surface intérieure de la paroi latérale (38) de la coque (1) présente une première protubérance intérieure (36) et une seconde protubérance intérieure (37).

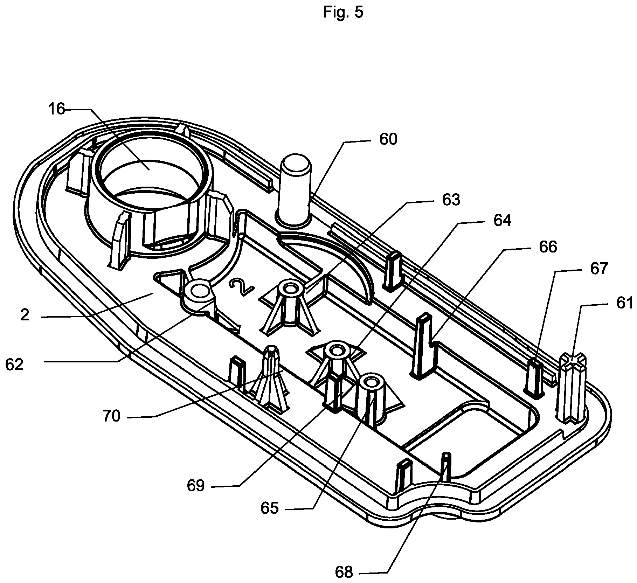

La première protubérance intérieure (36) est positionnée dans l'espace disponible entre la roue de sortie (17) et la roue dentée intermédiaire (19). Elle présente une cavité (39) de section hexagonale pour recevoir un picot de positionnement de section circulaire (60) prévu sur le couvercle (2) et visible en figure 5.

La seconde protubérance intérieure (37) est positionnée dans l'angle de la coque (1) dépourvue de protubérance extérieure. Elle présente une cavité débouchante (40) oblongue dans l'exemple décrit, avec un axe principal parallèle à la face latérale (38) pour faciliter le positionnement du couvercle (2) par rapport à la coque (1).

Cette cavité débouchante (40) est destinée à recevoir un picot anti-rotation (61), visible en figure 5 présentant une section en forme de croix et s'étendant perpendiculairement à la surface intérieure du couvercle (2).

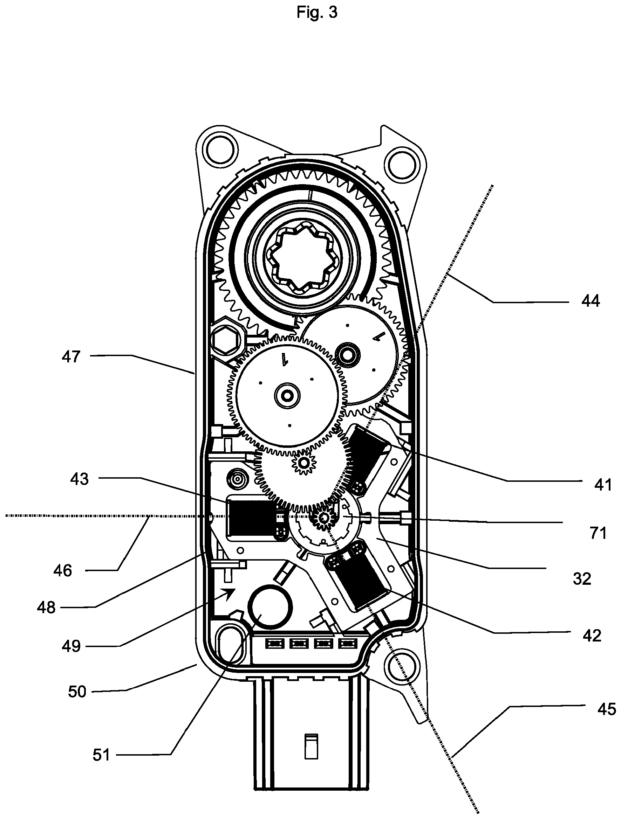

La figure 3 représente une vue de l'intérieur de l'actionneur après retrait du couvercle (2) et du circuit imprimé (22).

Le stator (32) présente trois pôles bobinés (41 à 43) s'étendant radialement et est formé par une structure de tôles empilées. Chaque pôle (41 à 43) présente une dent centrale entourée par une bobine.

Les axes médians (44 à 46) des pôles bobinés respectivement (41 à 43) forment un angle mécanique de 120° deux à deux. Le stator présente ainsi une forme d'étoile triangulaire radiale avec chaque pôle bobiné formant une branche d'étoile.

La coque (1) présente un axe longitudinal (L) reliant le connecteur (14) à la roue de sortie (17). Cet axe longitudinal est parallèle aux deux faces latérales de la coque (1), chacune s'étendant le long de la direction longitudinale.

Le stator (32) est positionné dans la coque (1) de telle sorte que l'un des pôles (43) soit orienté pour former un angle d'environ 90° par rapport à l'axe longitudinal (L) de la coque (1). Ce positionnement permet de réduire la largeur de la coque et donc l'encombrement général de l'actionneur et d'optimiser l'occupation de l'espace intérieur de la coque (1).

Une tolérance de ± 20°, et de préférence ± 10° est possible car l'effet sur l'encombrement reste minime en raison d'un impact selon le cosinus de cette variation angulaire. L'effet d'un léger décalage angulaire par rapport à la position optimale à 90° peut encore être réduit en prévoyant un chanfrein (48) à l'angle du stator venant en contact avec la face latérale (47).

Ce positionnement du rotor (32) permet aussi de dégager un espace (49) entre les deux pôles (42, 43) du stator, et l'angle (50) de la coque. Cet espace permet de positionner un condensateur de filtrage (51), typiquement chimique et de forme cylindrique, soudé sur le circuit imprimé (22).

### Description détaillée de la mise à la masse du stator

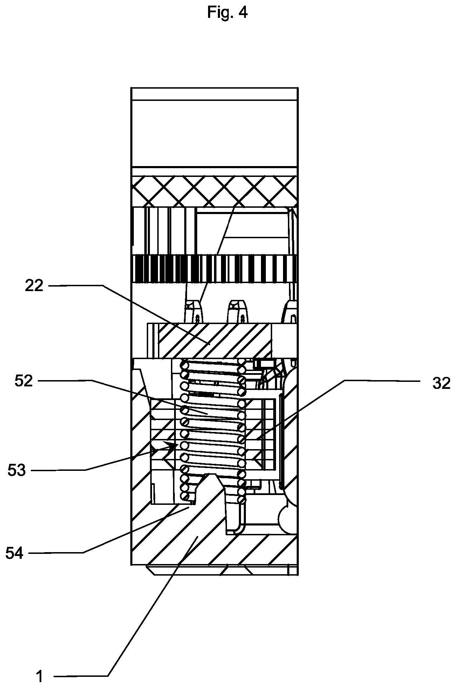

La figure 4 représente une vue agrandie partielle du stator (32) et du circuit imprimé (22).

Pour réaliser la mise à la masse électrique du stator (32), l'actionneur comporte un ressort (52) métallique introduit dans un perçage traversant (53) formé dans la culasse statorique. Le fond de la coque (1) présente en regard de ce perçage (53) une surface étagée ou inclinée, pour former une zone de réception de l'extrémité inférieure (54) du ressort qui n'est pas parallèle au plan transversal. Cette configuration conduit à un flambage du ressort, lorsqu'il est mis sous contrainte, ce qui force un contact mécanique et donc électrique entre les spires du ressort (52) et la surface intérieure du perçage (53).

Du côté opposé, le ressort (52) vient en contact avec une piste conductrice du circuit imprimé (22), qui est relié à la masse.

Lors de la mise en place du circuit imprimé, celui-ci vient s'appuyer sur le ressort (52) et le mettre en compression, assurant ainsi une bonne liaison électrique et mécanique entre la culasse du stator (22) et la piste conductrice reliée à la masse.

### Description détaillée du couvercle

La figure 5 représente une vue de la surface intérieure du couvercle (2).

Il présente un palier (16) assurant le positionnement et le guidage de la roue de sortie (17), ainsi que des paliers (62 à 65) pour le positionnement et le guidage des extrémités des axes des roues dentées respectivement (18 à 21) .

Le couvercle (2) présente en outre deux picots d'assemblage (60, 61) dont la longueur est supérieure aux paliers (62 à 65) de façon à permettre le positionnement précis du couvercle (2) par rapport à la coque (1) et des éléments mécaniques, notamment les axes des roues dentées intermédiaires, de la roue de sortie et du rotor (71), de façon à ce que, lorsque l'on rapproche le couvercle (2) de la coque (1), les extrémités des axes s'engagent sans difficultés dans les paliers correspondants.

Le couvercle présente en outre quatre butées (66 à 69) destinées à limiter les déplacements inopinés du circuit imprimé (22) résultant de vibration. Ces butées (66 à 69) ne viennent pas en contact avec la surface du circuit imprimé (22) lorsque celui-ci occupe sa position nominale, mais empêche un déplacement excessif risquant de désaccoupler les plots de connexion lors de chocs ou de vibrations.

Un plot (70) limite de la même façon le déplacement du stator (32) sans venir en contact avec ce dernier lorsqu'il est en position nominale.

## Revendications

1. Actionneur mécatronique constitué par un boîtier comprenant un axe longitudinal intégrant dans une coque (1) un moteur électrique triphasé formé par un stator (32), le stator (32) étant excité par des bobines électriques et par un rotor (71) aimanté, entraînant un arbre de sortie (17) par l'intermédiaire d'un train d'engrenages, l'axe dudit rotor (71), l'axe de l'arbre de sortie (17) et les axes de roues dentées intermédiaires (18 à 20) étant parallèles, ledit stator (32) présentant une forme d'étoile triangulaire radiale dont les trois pôles bobinés (41 à 43) forment les trois branches d'étoile, les axes de symétrie de deux pôles bobinés consécutifs formant un angle mécanique de 120°, **caractérisé en ce que** le boîtier intègre également un circuit électronique (22) comprenant un condensateur (51) pour le filtrage du signal électrique et **en ce que** ledit condensateur (51) de filtrage est constitué par un composant tubulaire monté perpendiculairement au plan du circuit imprimé (22), ledit condensateur (51) étant positionné dans l'espace (49) délimité d'une part par deux pôles statoriques consécutifs (42, 43) et d'autre part par un angle (50) du boîtier situé en face desdits deux pôles statoriques consécutifs, le stator (32) est positionné dans le boîtier de façon à ce que l'axe de symétrie (46) de l'un desdits trois pôles bobinés (41 à 43) forme avec l'axe longitudinal (L) du boîtier un angle entre 70° et 110°, ledit condensateur (51) étant positionné dans l'espace (49) délimité d'une part par le pôle (43) dont l'axe de symétrie forme avec l'axe longitudinal (L) du boîtier l'angle entre 70° et 110° et le pôle statorique consécutif (42), et d'autre part par l'angle (50) du boîtier situé en face desdits deux pôles statoriques consécutifs.

2. Actionneur mécatronique selon la revendication 1 **caractérisé en ce que** le stator (32) est positionné dans le boîtier de façon à ce que l'axe de symétrie de l'un desdits trois pôles bobinés (41 à 43) forme avec l'axe longitudinal (L) un angle de 90°.

3. Actionneur mécatronique selon la revendication 1 **caractérisé en ce que** le stator (32) est positionné dans le boîtier de façon à ce que l'axe de symétrie (46) d'un des trois pôle bobiné forme avec l'axe longitudinal (L) du boîtier un angle compris entre 70 et 110°, un chanfrein (48) est positionné selon ledit axe de symétrie du pôle au niveau de la zone la plus proche de la paroi latérale (47).

4. Actionneur mécatronique selon l'une quelconque des revendications 1 à 3 **caractérisé en ce que** la totalité des composants électroniques sont soudés sur la surface du circuit imprimé (22) orientée vers le stator (32), ledit circuit imprimé (22) présentant un trou de passage de l'axe du rotor et des trous étamés (27 à 31 ; 23 à 26) pour l'insertion des plots de connexion des trois bobines électriques, ainsi que des broches du connecteur électrique, lesdites broches s'étendant toutes parallèlement aux axes mécaniques, en direction de la surface du circuit imprimé.

5. Actionneur mécatronique selon l'une quelconque des revendications 1 à 2 **caractérisé en ce que** le circuit imprimé (22) présente au moins un trou ou une encoche pour le passage d'un axe mécanique d'une desdites roues dentées.

6. Actionneur mécatronique selon l'une quelconque des revendications 1 à 2 **caractérisé en ce que** le circuit imprimé (22) présente une dimension telle que sa projection dans un plan transversal s'inscrit dans la projection du cercle circonscrit audit stator (32), sur ledit plan transversal, hormis pour la partie arrière du circuit imprimé (22) correspondant à la connexion du connecteur électrique (14) et **en ce que** ledit circuit imprimé (22) est positionné par rapport audit boîtier pour préserver, par rapport aux faces latérales de part et d'autre, un espace d'une largeur supérieure à 10% de la largeur intérieure dudit boîtier.

7. Actionneur mécatronique selon l'une quelconque des revendications 1 à 2 **caractérisé en ce qu'**il comporte un ressort métallique (52) positionné en compression entre une zone non isolée de la culasse (32) dudit stator et une piste conductrice de masse du circuit imprimé (22).

8. Actionneur mécatronique selon la revendication précédente **caractérisé en ce que** ledit stator (32) présente un perçage (53) non isolé pour recevoir la partie inférieure dudit ressort (52), la surface périphérique dudit ressort (52) venant en contact avec la surface intérieure non isolée dudit perçage (53) lorsque le ressort (52) est mis en compression par le circuit imprimé (22).

9. Actionneur mécatronique selon l'une quelconque des revendications 1 à 2 **caractérisé en ce que** ledit boîtier est constitué par une coque (1) et un couvercle de fermeture (2) complémentaires, l'une des faces latérales de ladite coque (1) présentant une protubérance intérieure (36) percée par une cavité débouchante (39), positionnée entre deux roues dentées (17 et 19), et une deuxième protubérance (37) percée par une cavité (40), ledit couvercle (2) présentant deux plots complémentaires (60, 61) auxdites cavités (39, 40), d'une longueur supérieure aux paliers de guidage (62 à 65) des extrémités supérieures des axes mécaniques, lesdits paliers de guidage (62 à 65) s'étendant à la surface intérieure du couvercle (2).

10. Actionneur mécatronique selon la revendication précédente **caractérisé en ce que** ledit couvercle (2) présente en outre au moins un plot (66 à 69) formant une butée pour le circuit imprimé (22), ladite butée ne venant pas en contact avec le circuit imprimé (22) lorsque ce dernier est en position nominale.

11. Actionneur mécatronique selon la revendication précédente **caractérisé en ce que** ledit couvercle présente en outre au moins un plot (70) formant une butée pour le stator (32), ladite butée ne venant pas en contact avec le stator (32) lorsque ce dernier est en position nominale.

12. Actionneur mécatronique selon l'une quelconque des revendications 1 à 3 **caractérisé en ce que** le boîtier présente trois prolongements de fixation disposé au niveau de trois coins du boîtier (3 à 5), chacun desdits prolongements (3 à 5) étant traversé par un perçage (6 à 8) dont l'axe est parallèle aux axes mécaniques du moteur et des roues dentées, l'un desdits prolongements (5) présentant une patte (9) de positionnement dans un logement complémentaire, un autre desdits prolongements (4) présentant une griffe de clipsage (11) lors du pivotement du boîtier par rapport à ladite patte (9) de positionnement.

## Patentansprüche

1. Mechatronischer Aktuator bestehend aus einem Gehäuse, das eine Längsachse umfasst und das in einer Schale (1) ein durch einen Stator (32) gebildeten Drehstrom-Elektromotor enthält, wobei der Stator (32) durch elektrische Spulen und durch einen Magnetrotor (71) erregt wird, der über ein Zahnradgetriebe eine Abtriebswelle (17) antreibt, wobei die Achse des Rotors (71), die Achse der Abtriebswelle (17) und die Achse der Zwischenzahnräder (18 bis 20) parallel sind, wobei der Stator (32) die Form eines radialen dreieckigen Sterns aufweist, bei dem die drei gewickelten Pole (41 bis 43) die drei Stränge des Sterns bilden, wobei die Symmetrieachsen zweier nebeneinanderliegender gewickelter Pole einen mechanischen Winkel von 120° bilden, **dadurch gekennzeichnet, dass** das Gehäuse darüber hinaus eine elektronische Schaltung (22) enthält, die einen Kondensator (51) zum Filtern des elektrischen Signals umfasst, und dass der Kondensator (51) zum Filtern aus einem senkrecht zur Ebene der Leiterplatte (22) angebrachten rohrförmigen Bauteil besteht, wobei der Kondensator (51) in dem einerseits durch zwei nebeneinanderliegende Statorpole (42, 43) und andererseits durch eine den beiden nebeneinanderliegenden Statorpolen gegenüberliegende Ecke (50) des Gehäuses begrenzten Raum (49) angeordnet ist, dass der Stator (32) derart im Gehäuse angeordnet ist, dass die Symmetrieachse (46) eines der drei gewickelten Pole (41 bis 43) mit der Längsachse (L) des Gehäuses einen Winkel zwischen 70° und 110° bildet, wobei der Kondensator (51) in dem Raum (49) angeordnet ist, der einerseits durch den Pol (43), dessen Symmetrieachse mit der Längsachse (L) des Gehäuses den Winkel zwischen 70° und 110° bildet, und den daneben liegenden Statorpol (42) und andererseits durch die den beiden nebeneinanderliegenden Statorpolen gegenüberliegende Ecke (50) des Gehäuses begrenzt wird.

2. Mechatronischer Aktuator nach Anspruch 1, **dadurch gekennzeichnet, dass** der Stator (32) derart im Gehäuse angeordnet ist, dass die Symmetrieachse eines der drei gewickelten Pole (41 bis 43) mit der Längsachse (L) einen Winkel von 90° bildet.

3. Mechatronischer Aktuator nach Anspruch 1, **dadurch gekennzeichnet, dass** der Stator (32) derart im Gehäuse angeordnet ist, dass die Symmetrieachse (46) eines der drei gewickelten Pole mit der Längsachse (L) des Gehäuses einen Winkel zwischen 70 und 110° bildet, wobei sich entlang der Symmetrieachse des Pols auf der Höhe des der Seitenwand (47) am nächsten liegenden Bereichs eine Abschrägung (48) befindet.

4. Mechatronischer Aktuator nach einem der Ansprüche 1 bis 3, **dadurch gekennzeichnet, dass** alle elektronischen Bauteile auf die dem Stator (32) zugewandte Oberfläche der Leiterplatte (22) aufgelötet sind, wobei die Leiterplatte (22) ein Durchgangsloch für die Achse des Rotors und verzinnte Löcher (27 bis 31; 23 bis 26) zum Einsetzen der Verbindungszapfen der drei elektrischen Spulen sowie Stifte des elektrischen Verbindungssteckers aufweist, wobei sich die Stifte alle parallel zu den mechanischen Achsen in Richtung der Oberfläche der Leiterplatte erstrecken.

5. Mechatronischer Aktuator nach einem der Ansprüche 1 bis 2, **dadurch gekennzeichnet, dass** die Leiterplatte (22) mindestens ein Loch oder eine Einkerbung für den Durchgang einer mechanischen Achse eines der Zahnräder aufweist.

6. Mechatronischer Aktuator nach einem der Ansprüche 1 bis 2, **dadurch gekennzeichnet, dass** die Leiterplatte (22) eine solche Abmessung aufweist, dass ihre Projektion auf eine Querebene auf die Projektion des um den Stator (32) gezogenen Kreises auf die Querebene fällt, ausgenommen des hinteren, dem Anschluss des elektrischen Verbindungsteckers (14) entsprechenden Teils der Leiterplatte (22), und dadurch, dass die Leiterplatte (22) bezüglich des Gehäuses so angeordnet ist, dass bezüglich der beiden Seitenflächen auf beiden Seiten ein Raum mit einer Breite von mehr als 10 % der inneren Breite des Gehäuses verbleibt.

7. Mechatronischer Aktuator nach einem der Ansprüche 1 bis 2, **dadurch gekennzeichnet, dass** er eine Metallfeder (52) aufweist, die zwischen einem nicht isolierten Bereich des Gestells (32) des Stators und einer Massenleiterbahn der Leiterplatte (22) zusammengedrückt angeordnet ist.

8. Mechatronischer Aktuator nach dem vorhergehenden Anspruch, **dadurch gekennzeichnet, dass** der Stator (32) eine nicht isolierte Bohrung (53) zur Aufnahme des unteren Teils der Feder (52) aufweist, wobei die Umfangsfläche der Feder (52) mit der nicht isolierten Innenfläche der Bohrung (53) in Kontakt kommt, wenn die Feder (52) durch die Leiterplatte (22) zusammengedrückt wird.

9. Mechatronischer Aktuator nach einem der Ansprüche 1 bis 2, **dadurch gekennzeichnet, dass** das Gehäuse aus einer Schale (1) und eine Haube (2) zum Verschließen, die sich gegenseitig ergänzen, besteht, wobei eine der Seitenflächen der Schale (1) eine von einem sich öffnenden Hohlraum (39) durchsetzte, zwischen zwei Zahnrädern (17 und 19) angeordnete innere Auswölbung (36) und eine zweite von einem Hohlraum (40) durchsetzte Auswölbung (37) aufweist, wobei die Haube (2) zwei zu den Hohlräumen (39, 40) komplementäre Zapfen (60, 61) aufweist, die länger als die Führungslager (62 bis 65) der oberen Enden der mechanischen Achsen sind, wobei die Führungslager (62 bis 65) von der Innenfläche der Haube (2) abgehen.

10. Mechatronischer Aktuator nach dem vorhergehenden Anspruch, **dadurch gekennzeichnet, dass** die Haube (2) ferner mindestens einen einen Anschlag für die Leiterplatte (22) bildenden Zapfen (66 bis 69) aufweist, wobei der Anschlag nicht mit der Leiterplatte (22) in Kontakt kommt, wenn sich letztere in Nennstellung befindet.

11. Mechatronischer Aktuator nach dem vorhergehenden Anspruch, **dadurch gekennzeichnet, dass** die Haube ferner mindestens einen einen Anschlag für den Stator (32) bildenden Zapfen (70) aufweist, wobei der Anschlag nicht mit dem Stator (32) in Kontakt kommt, wenn sich letzterer in Nennposition befindet.

12. Mechatronischer Aktuator nach einem der Ansprüche 1 bis 3, **dadurch gekennzeichnet, dass** das Gehäuse drei auf Höhe dreier Ecken des Gehäuses (3 bis 5) angeordnete Befestigungsfortsätze aufweist, wobei jeder der Fortsätze (3 bis 5) von einer Bohrung (6 bis 8) durchsetzt ist, deren Achse parallel zu den mechanischen Achsen des Motors und der Zahnräder verläuft, wobei einer der Fortsätze (5) eine Nase (9) zum Positionieren in eine komplementäre Aufnahme aufweist, ein anderer der Fortsätze (4) einen Zahn (11) zum Einrasten beim Schwenken des Gehäuses bezüglich der Nase (9) zum Positionieren aufweist.

## Claims

1. Mechatronic actuator consisting of a housing comprising a longitudinal axis incorporating, in a shell (1), a three-phase electric motor formed by a stator (32), the stator (32) being excited by electric coils and by a magnetized rotor (71), driving an output shaft (17) via a gear train, the axis of said rotor (71), the axis of the output shaft (17) and the axes of intermediate gear wheels (18 to 20) being parallel, said stator (32) having the shape of a radial triangular star of which the three coiled poles (41 to 43) form the three star branches, the axes of symmetry of two consecutive coiled poles forming a mechanical angle of 120°, **characterized in that** the housing also incorporates an electronic circuit (22) comprising a capacitor (51) for filtering the electrical signal and **in that** said filtering capacitor (51) is constituted by a tubular component mounted perpendicularly to the plane of the printed circuit (22), said capacitor (51) being positioned in the space (49) delimited on the one hand by two consecutive stator poles (42, 43) and on the other hand by an angle (50) of the housing located opposite said two consecutive stator poles, the stator (32) is positioned in the housing so that the axis of symmetry (46) of one of said three coiled poles (41 to 43) forms an angle of between 70° and 110° with the longitudinal axis (L) of the housing, said capacitor (51) being positioned in the space (49) delimited on the one hand by the pole (43) of which the axis of symmetry forms the angle of between 70° and 110° with the longitudinal axis (L) of the housing, and the consecutive stator pole (42), and on the other hand by the angle (50) of the housing located opposite said two consecutive stator poles.

2. Mechatronic actuator according to claim 1, **characterized in that** the stator (32) is positioned in the housing so that the axis of symmetry of one of said three coiled poles (41 to 43) forms an angle of 90° with the longitudinal axis (L).

3. Mechatronic actuator according to claim 1, **characterized in that** the stator (32) is positioned in the housing so that the axis of symmetry (46) of one of the three coiled poles forms an angle of between 70 and 110° with the longitudinal axis (L) of the housing, and a chamfer (48) is positioned along said axis of symmetry of the pole in the region of the area closest to the side wall (47).

4. Mechatronic actuator according to any of claims 1 to 3, **characterized in that** all of the electronic components are soldered onto the surface of the printed circuit (22) so as to face the stator (32), said printed circuit (22) having a hole through which the axis of the rotor passes and tinned holes (27 to 31; 23 to 26) for the insertion of the connection studs for the three electric coils, as well as for the pins of the electrical connector, said pins all extending in parallel with the mechanical axes, toward the surface of the printed circuit board.

5. Mechatronic actuator according to either claim 1 or claim 2, **characterized in that** the printed circuit (22) has at least one hole or slot through which a mechanical axis of one of said gear wheels passes.

6. Mechatronic actuator according to either claim 1 or claim 2, **characterized in that** the printed circuit (22) has a dimension such that its projection in a transverse plane fits into the projection of the circle circumscribed by said stator (32), on said transverse plane, except for the rear part of the printed circuit (22) corresponding to the connection of the electrical connector (14), and **in that** said printed circuit (22) is positioned relative to said housing so as to preserve, with respect to the side faces on either side, a space of a width greater than 10% of the internal width of said housing.

7. Mechatronic actuator according to either claim 1 or claim 2, **characterized in that** it comprises a metal spring (52) positioned in compression between an uninsulated area of the yoke (32) of said stator and a conductive ground track of the printed circuit (22).

8. Mechatronic actuator according to the preceding claim, **characterized in that** said stator (32) has a non-insulated bore (53) for receiving the lower part of said spring (52), the peripheral surface of said spring (52) coming into contact with the non-insulated inner surface of said bore (53) when the spring (52) is compressed by the printed circuit (22).

9. Mechatronic actuator according to either claim 1 or claim 2, **characterized in that** said housing consists of a complementary shell (1) and closure cover (2), one of the side faces of said shell (1) having an inner protrusion (36) in which an open cavity (39) is made, positioned between two gear wheels (17 and 19), and a second protrusion (37) in which a cavity (40) is made, said cover (2) having two studs (60, 61) complementary to said cavities (39, 40), of a length greater than the guide bearings (62 to 65) of the upper ends of the mechanical axes, said guide bearings (62 to 65) extending on the inner surface of the cover (2).

10. Mechatronic actuator according to the preceding claim, **characterized in that** said cover (2) also has at least one stud (66 to 69) which forms a stop for the printed circuit (22), said stop not coming into contact with the printed circuit (22) when said circuit is in the nominal position.

11. Mechatronic actuator according to the preceding claim, **characterized in that** said cover also has at least one stud (70) which forms a stop for the stator (32), said stop not coming into contact with the stator (32) when said stator is in the nominal position.

12. Mechatronic actuator according to any of claims 1 to 3, **characterized in that** the housing has three attachment extensions arranged at three corners of the housing (3 to 5), each of said extensions (3 to 5) being traversed by a bore (6 to 8) of which the axis is parallel to the mechanical axes of the motor and the gear wheels, one of said extensions (5) having a positioning tab (9) in a complementary casing, and another of said extensions (4) having a clipping claw (11) when the housing is pivoted relative to said positioning tab (9).
